# EUROPEAN PATENT APPLICATION

(11) **EP 2 442 472 A1**
(43) Date of publication of application: **18.04.2012**
(21) Application number: 09845716.1
(22) Date of filing: 23.11.2009
(51) Int. Cl.: H04L 1/00

(54) **METHOD FOR PROCESSING ABNORMALITY BETWEEN NON-ADJACENT NODES**

(30) Priority: 11.06.2009 CN 200910147321
(71) Applicant: ZTE Corporation, Shenzhen, Guangdong 518057 (CN)
(72) Inventor: YE, Minya, Shenzhen Guangdong 518057 (CN); DING, Yanjing, Shenzhen Guangdong 518057 (CN); LIU, Xiliang, Shenzhen Guangdong 518057 (CN)
(74) Representative: Hannke, Christian
(86) International application number: PCT/CN2009/075093
(87) International publication number: WO 2010/142107

(57) **Abstract**

The present invention provides a method for processing abnormalities between non-adjacent nodes. which is applied to network element nodes supporting a GPRS Tunneling Protocol (GTP). The GTP node sends a network element-level node abnormality message to other adjacent GTP nodes once the abnormality of an adjacent GTP node is detected. The message comprises information about the abnormal GTP node. The method of the present invention enables the non-adjacent GTP nodes to obtain each other's abnormality therebetween and perform relative processing by introducing the network element-level node abnormality message, thus solves the problem when the GTP is used in the 3GPP system that the resources cannot be recycled in time because of each other's unknown recovery between the non-adjacent nodes, or the problem of a message storm that may caused by the user-level message notification through the intermediate node.

## Description

### TECHNICAL FIELD

The present invention belongs to the field of packet domain evolution in a mobile communication system, particularly relates to a method for processing each other's recovery between nodes.

### BACKGROUND

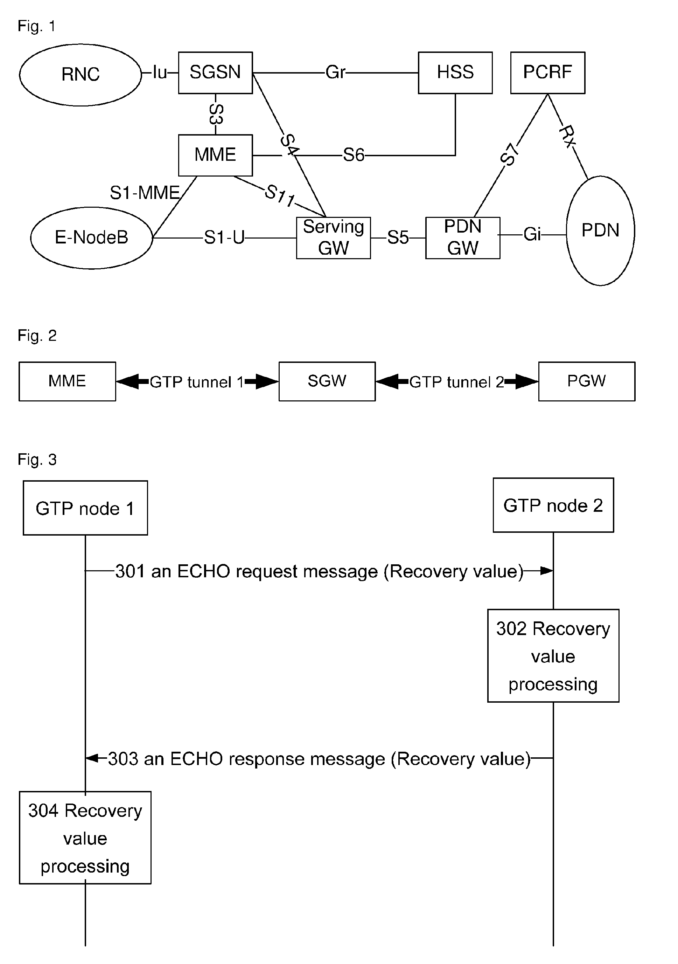

The next generation mobile wireless network project from the 3rd Generation Partnership Project (3GPP) is called System Architecture Evolution (SAE). The architecture of the SAE is as shown in Fig. 1, which comprises:
an Evolved Radio Access Network (E-RAN), which can provide higher uplink/downlink rate, lower transmission delay and more reliable wireless transmission. The network element comprised in the E-RAN is Evolved NodeB (eNodeB) that provides radio resources for the access of a terminal;
an Home Subscriber Server (HSS), which permanently stores user subscription data;
a Packet Data Network (PDN), which provides services for the user;
an E-Packet core network, which provides lower delay and allows the access of more radio access systems. It comprises the following network elements:
   an Mobility Management Entity (MME), which is a control plane function entity and a server for temporarily storing user data, responsible for managing and storing UE contexts, such as UE/user ID, mobility management status and user security parameters and the like, distributing temporary ID for a user, and responsible for authenticating the user when the UE stays in a tracking area or network; processing all non-access stratum messages between the MME and the UE; and triggering paging at the SAE; and
   a serving GateWay (GW), which is a user plane entity, responsible for processing user plane data routing and ending downlink data of a UE in idle status; managing and storing SAE bearer contexts of the UE, such as IP bearer service parameters and network internal routing information. It is an anchor of the 3GPP system internal user plane; and one user has only one serving GW at one moment;
   a Packet Data Network GateWay (PDN GW), which is responsible for a UE to access a PDN, and used for distributing user IP address, also a mobility anchor of 3GPP and non-3GPP access systems; one user can access multiple PDN GWs at the same moment; and
   a Policy and Charging Rule Functionality (PCRF) entity, which is mainly used for generating Quality of Service (QoS) rules and charging rules to control user data transmission according to service information, user subscription information and operator configuration information. The PCRF entity also can control the creation and release of the bearer in the access network.

Physically, the serving GW and the PDN GW may be syncretic.

A GPRS Tunneling Protocol (GTP) that self-defined by the 3GPP organization has been always used in the 3GPP network. The GTP is a tunneling protocol that performs transmission between adjacent nodes, for example, an MME and a SGW are adjacent nodes, the SGW and a PGW are adjacent nodes, while the MME and the PGW are non-adjacent nodes, as shown in Fig. 2. If the MME network element wants to transmit a message to the PGW, it is necessary to use two segments of GTP tunnels, that is, GTP tunnel 1 created between the MME and the SGW is used firstly to send the information to the SGW; and then the SGW transmits the contents received from the GTP tunnel 1 to the PGW through GTP tunnel 2 between the SGW and the PGW.

As the GTP tunnel is a transmission tunnel between adjacent nodes, the node using the GTP tunnel can only directly obtain information about the adjacent nodes, that is, the GTP can only perform node management between adjacent nodes. The message to perform node validity check in the GTP is an ECHO (route detecting) message, as shown in Fig. 3.

Step S301: GTP node 1 sends an ECHO request message to adjacent GTP node 2 at regular time, the ECHO request message comprises the times of recovery of this node, namely, a recovery value (GTP node 1).

Step S302: after receiving the ECHO request message, the GTP node 2 checks whether the received recovery value (GTP node 1) is consistent to the value that is received and stored last time; if yes, no other processing will be done; otherwise, it is considered that the GTP node 1 has been recovered, and user information related to the GTP node 1 has become invalid, therefore these user resources are recycled and a new recovery value (GTP node 1) is stored.

Step S303: the GTP node 2 feeds an ECHO response message back to the GTP node 1, in which a recovery value (GTP node 2) of the node is comprised.

Step S304: after receiving the ECHO response message, the GTP node 1 checks whether the received recovery value (GTP node 2) is consistent to the value that is received and stored last time; if yes, no other processing will be done; otherwise, it is considered that the GTP node 2 has been recovered, and user information related to the GTP node 2 has become invalid, therefore these user resources are recycled and a new recovery value (GTP node 2) is stored.

Besides, in step S301, if the GTP node 1 had not received an ECHO response message from the GTP node 2 after sending the ECHO request message to the GTP node 2, the GTP node 1 will send the ECHO request message to the GTP node 2 again, if there is still no response message after it sends the ECHO request message for many times, then the GTP node 1 will consider that the GTP node 2 is abnormal and user information related to the GTP node 2 has become invalid, therefore these user resources are recycled.

It can be seen from above descriptions that, in the GTP, there is a complete node detection mechanism between adjacent nodes. In the original network, that is, in the GPRS network to which the 2G/3G system accesses, GTP messages are only transmitted between adjacent nodes, therefore this mode can meet the requirements of the system completely. However, this mode, in which node detection is only performed between adjacent nodes, has defects in the SAE system. In an Evolved Packet System (EPS), there is a situation in which information is transmitted between non-adjacent nodes, that is, the situation in which messages are sent between the MME and the PGW as shown in Fig. 2. As node information can only be interacted between the MME and the SGW or between the SGW and the PGW, namely, processing ECHO flow, therefore abnormality, which is mainly recovery, of each other node can only be detected between the MME and the SGW or between the SGW and the PGW but between the MME and the PGW. If the PGW is recovered, the SGW can find that the PGW is recovered through the node detection, at this time, the SGW will recycle all user information related to the PGW. As the MME is unable to know that the PGW is recovered, what is feasible at present is that the SGW notifies the MME to recycle through the GTP tunnel between the MME and the SGW when it recycles relative user information. However, there is only user-level notification message between the SGW and the MME; that is to say, for each user to be recycled, the SGW has to send one user deletion message to notify the MME to recycle the user. In this case, as there may be many online users and each user needs to be notified in time, use of this user-level notification message may cause a message storm easily.

### SUMMARY

Therefore, the main purpose of the present invention is to provide a method for processing abnormalities between non-adjacent nodes, in order to obtain recovery information about the non-adjacent nodes in time, release resources in time and avoid causing a message storm.

In order to achieve the above purpose, the technical solution of the present invention is realized in the following way.

A method for processing abnormalities between non-adjacent nodes is provided, which is applied to network element nodes supporting a GTP, the method comprises:
sending a network element-level node abnormality message to other adjacent GTP nodes when abnormality of an adjacent GTP node is detected by a GTP node, and the message comprises information about the abnormal GTP node.

The method may further comprise: the GTP node, which receives the network element-level node abnormality message, sends the message to other adjacent GTP nodes.

In an evolved packet system, the GTP node involved in the method may at least comprise a PGW, a SGW and an MME; and the step of sending the network element-level node abnormality message when the SGW detects abnormality of the PGW may be as follows:
the SGW respectively sends a network element-level node abnormality notification message comprising relative information about the PGW to all MMEs related to the PGW.

The process that the SGW detects the abnormality of the PGW may comprise any one of the following cases:
the SGW detects link-break between itself and the PGW;
the SGW detects recovery of the PGW;
the PGW does not respond when the PGW is detected.

The relative information about the PGW comprised in the message may be a PGW ID and/or PGW address.

The MME, which receives the abnormality notification message, may further perform one or more of the following PGW abnormality processing:
recording information about the abnormal PGW node;
determining the abnormal PGW node as a not-selected PGW node in subsequent selection of PGW nodes;
recycling user resources related to the abnormal PGW node.

In an evolved packet system, the GTP node involved in the method may at least comprise a PGW, a SGW and an MME; and the step of sending the network element-level node abnormality message when the SGW detects abnormality of the MME may be as follows:
the SGW respectively sends a network element-level node abnormality notification message comprising relative information about the MME to all PGWs related to the MME.

The process that the SGW detects the abnormality of the MME may comprise any one of the following cases:
the SGW detects link-break between itself and the MME;
the SGW detects recovery of the MME;
the MME does not respond when the MME is detected.

The relative information about the MME comprised in the message may be an MME ID and/or MME address.

The PGW, which receives the abnormality notification message, may further perform one or more of the following MME abnormality processing:
recording information about the abnormal MME node;
recycling user resources related to the abnormal MME node.

It can be seen that the method of the present invention enables the non-adjacent GTP nodes to obtain each other's abnormality and perform relative processing by introducing the network element-level node abnormality message, thus solves the problem when the GTP is used in the 3GPP system that the resources cannot be recycled in time because of each other's unknown recovery between the non-adjacent nodes, or the problem of the message storm that may be caused by the user-level message notification through the intermediate node.

### BRIEF DESCRIPTION OF THE DRAWINGS

Fig. 1 shows an SAE architecture diagram in the prior art;
Fig. 2 shows a diagram for transmitting a GTP message between non-adjacent nodes in the GTP;
Fig. 3 shows a flow chart for performing node detection between adjacent nodes in the GTP;
Fig. 4 shows a flow chart of the embodiment of the present invention when a PGW is abnormal; and
Fig. 5 shows a flow chart of the embodiment of the present invention when an MME is abnormal.

### DETAILED DESCRIPTION

The conception of the present invention is that the GTP node sends a network element-level node abnormality message to other adjacent GTP nodes once abnormality of an adjacent GTP node is detected, and the message comprises information about the abnormal GTP node.

Specifically, for example, for a first GTP node, a second GTP node and a third GTP node connected in turn, the first GTP node and the second GTP node are adjacent nodes, the second GTP node and the third GTP node are adjacent nodes, and the first GTP node and the third GTP node are non-adjacent nodes. When detecting abnormality of the first GTP node, the second GTP node sends a network element-level node abnormality message (for example, node abnormality notification message) to the third GTP node, in which relative information about the abnormal node is comprised, so as to notify the third GTP node that the first GTP node is abnormal; and the third GTP node performs relatively processing according to a node abnormality after receiving the abnormality notification sent by the second GTP node.

If further connected with a fourth GTP node, the third GTP node sends the network element-level node abnormality message to the fourth GTP node after receiving the message sent by the second GTP node.

Through the above steps, non-adjacent GTP nodes are able to obtain each other's abnormality therebetween and perform relative processing.

The present invention will be described in details below in conjunction with the drawings and specific embodiments.

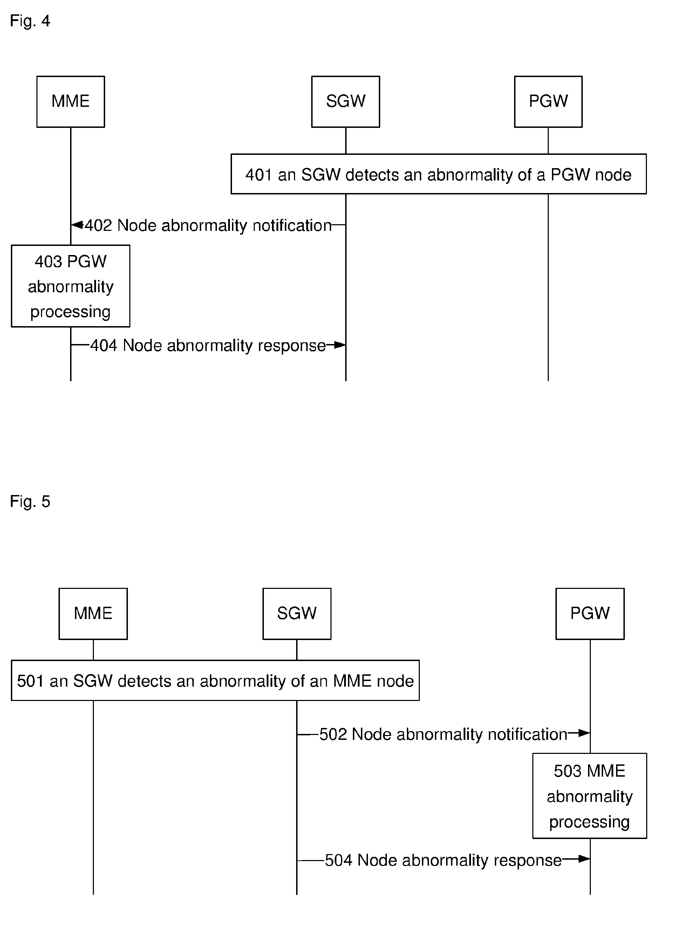

Fig. 4 shows an embodiment of the present invention when a PGW is abnormal.

Step S401: a SGW detects abnormality of a PGW.

Specific, the abnormality may be link-break between the PGW and the SGW or recovery of the PGW or no response of the PGW. A possible detection method is that the SGW sends an ECHO request message to the PGW, the PGW does not respond all the time, or a recovery value in the ECHO response message fed back by the PGW has changed.

Step S402: the SGW searches all MMEs related to the PGW when recycling user resources that itself related to the PGW, and sends a network element-level PGW abnormality notification message to each said MME, in which relative information about the abnormal PGW is comprised.

The relative information about the PGW may be a PGW ID and/or PGW address.

Step S403: after receiving the abnormality notification message, the MME performs relative processing to PGW abnormality.

The possible processing may be one or more of the following cases: recording information about the abnormal PGW node; in subsequent node selection of PGW, rejecting the node; recycling user resources related to the abnormal PGW node. The relative user resources comprise context resources and bearer resources and the like of the user.

Step S404: optionally, the MME feeds a node abnormality response message back to the SGW.

Fig. 5 shows an embodiment of the present invention when an MME is abnormal.

Step S501: a SGW detects abnormality of an MME.

Specific, the abnormality may be link-break between the MME and the SGW or recovery of the MME or no response of the MME. A possible detection method is that the SGW sends an ECHO request message to the MME, the MME does not respond all the time, or a recovery value in the ECHO response message fed back by the MME has changed.

Step S502: the SGW searches all PGWs related to the MME when recycling user resources that itself related to the MME, and sends a network element-level MME abnormality notification message to each said PGW, in which relative information about the abnormal MME is comprised.

The relative information about the MME may be an MME ID and/or MME address.

Step S503: after receiving the abnormality notification message, the PGW performs relative processing to MME abnormality .

The possible processing may be one or more of the following cases: recording the node abnormality of MME, recycling user resources related to the abnormal MME node. The relative user resources comprise context resources and bearer resources and the like of the user.

Step S504: optionally, the PGW feeds a node abnormality response message back to the SGW.

Of course, the present invention may have many other embodiments. It should be understood by the skilled in the art that the present invention may have various corresponding changes and variants within the spirit and essence of the present invention, and these corresponding changes and variants should be comprised within the protection scope of the claims of the present invention.

## Claims

1. A method for processing abnormalities between non-adjacent nodes, which is applied to network element nodes supporting a GPRS Tunneling Protocol (GTP), the method comprising:
sending a network element-level node abnormality message to other adjacent GTP nodes when abnormality of an adjacent GTP node is detected by a GTP node, and the message comprising information about the abnormal GTP node.

2. The method according to claim 1, further comprising:
the GTP node, which receives the network element-level node abnormality message, sending the message to other adjacent GTP nodes.

3. The method according to claim 1 or 2, wherein, in an evolved packet system, the GTP node involved in the method at least comprises a Packet Data Network GateWay (PGW), a serving GateWay (SGW) and a Mobility Management Entity (MME); and the step of sending the network element-level node abnormality message when the SGW detects abnormality of the PGW is as follows:
the SGW respectively sends a network element-level node abnormality notification message comprising relative information about the PGW to all MMEs related to the PGW.

4. The method according to claim 3, wherein the process that the SGW detects the abnormality of the PGW comprises any one of the following cases:
the SGW detects link-break between itself and the PGW;
the SGW detects recovery of the PGW;
the PGW does not respond when the PGW is detected.

5. The method according to claim 3, wherein the relative information about the PGW comprised in the message is a PGW ID and/or PGW address.

6. The method according to claim 3, wherein the MME, which receives the abnormality notification message, further performs one or more of the following PGW abnormality processing:
recording information about the abnormal PGW node;
determining the abnormal PGW node as a not-selected PGW node in subsequent selection of PGW nodes;
recycling user resources related to the abnormal PGW node.

7. The method according to claim 1, wherein, in an evolved packet system, the GTP node involved in the method at least comprises a PGW, a SGW and an MME; and the step of sending the network element-level node abnormality message when the SGW detects abnormality of the MME is as follows:
the SGW respectively sends a network element-level node abnormality notification message comprising relative information about the MME to all PGWs related to the MME.

8. The method according to claim 7, wherein the process that the SGW detects the abnormality of the MME comprises any one of the following cases:
the SGW detects link-break between itself and the MME;
the SGW detects recovery of the MME;
the MME does not respond when the MME is detected.

9. The method according to claim 7, wherein the relative information about the MME comprised in the message is an MME ID and/or MME address.

10. The method according to claim 7, wherein the PGW, which receives the abnormality notification message, further performs one or more of the following MME abnormality processing:
recording information about the abnormal MME node;
recycling user resources related to the abnormal MME node.
